# EUROPEAN PATENT APPLICATION

(11) **EP 3 859 943 A1**
(43) Date of publication of application: **04.08.2021**
(21) Application number: 20155136.3
(22) Date of filing: 03.02.2020
(51) Int. Cl.: H02K 1/27, H02K 7/18

(54) **MAGNET SYSTEM FOR A ROTOR AND PERMANENT MAGNET ELECTRICAL MACHINE**

(71) Applicant: Siemens Gamesa Renewable Energy A/S, 7330 Brande (DK)
(72) Inventor: ANDERSEN, Kim Folmer, 8700 Horsens (DK); JACOBSEN, Bo Nedergaard, 8300 Odder (DK); JENSEN, Thomas Toettrup, 7330 Brande (DK); SKOUGAARD, Ander Vorm, 7400 Herning (DK); THOUGAARD, Hans-Joergen, 8600 Silkeborg (DK)
(74) Representative: Aspacher, Karl-Georg

(57) **Abstract**

It is described a method a magnet system (100) for a rotor of a permanent magnet electrical machine, comprising: a first module (310a) comprising a first support member (342a); a second module (310b) comprising a second support member (342b); wherein the first module comprises a first permanent magnet (344a) supported by the first support member and/or the second module comprises a second permanent magnet (344b) supported by the second support member, wherein the first support member (342a) and the second support member (342b) have respective contact portions (460a,460b,470a,470b) which are at least partly structurally complementary to each other allowing to arrange the first module (310a) and the second module (310b) adjacent to each other in the axial direction (301), while the contact portions (460a,460b,470a,470b) contact each other and causing traverse shift in a direction travers to the axial direction, when pushed towards each other in the axial direction (301).

## Description

### Field of invention

The present invention relates to a magnet system for a rotor of a permanent magnet electrical machine, relates to a rotor for a permanent magnet electrical machine and further relates to a permanent magnet electrical machine including the rotor.

### Art Background

A permanent magnet electrical machine comprises an inner or outer rotor at which magnet modules are mounted. For example, the magnet modules may be slid into machined slots (or rails or tracks) on the inside of the rotor house. When they are assembled, each of the modules forms a magnetic pole. Geometrically, the slots may run from the non-drive end (NDE) to the drive end (DE) of the rotor house. The slots can go straight (axially, along the axis of rotation) or can be skewed.

Large diameter electrical machines with a high number of rotor poles may be known in direct drive wind turbine applications, among others. In order to easily insert the relatively large magnets or magnet modules, tracks or slots are machined down the axial length of the rotor, in order to insert individual pre-magnetized magnet modules. For being able to mount the modules on the rotor, the slot may be designed to be wider than the width of the base of the magnet modules (also referred to as base plate). To enable mounting or sliding the magnet modules into the slots, the magnet modules and the machined slot are designed and machined to have relative tolerances. Tolerance gaps between the magnet modules on one hand and the walls of the tracks or slots are required to allow the magnet modules to easily slide along the rotor groove. These tolerance gaps may lead to movement of the magnet modules during the operation. This may cause damage of the magnet modules or/and the rotor house as well as may result in access noise and vibration.

Therefore, the magnet modules can, during operation, move tangentially (i.e. in the circumferential direction) from one slot wall to the other slot wall, depending on the forces acting on it. In particular, a problem of the tangential movement of some of the magnet modules may occur in full operation or in partially open circuit modes (i.e. reduced converter operation (RCO)) and when running at low loads.

These problems are in particular observed in fractional slot topologies, where the number of poles does not divide into the number of slots without giving a remainder. Thus, the fraction of poles and slots is not equal to an integer. For example, in a 12 slots 10 poles configuration, the tangential force in open circuit operation on a single pole varies over an electrical cycle from a positive value to a negative value (open circuit operation is when the generator is not connected to any external electrical circuit). Thereby, a possible movement of the magnet module in the rotor slots (depending on the coefficient of friction) may result.

In permanent magnet machines with in particular surface-mounted magnets, tangential forces act on the magnets during operation. The magnets are often fixed in a slot (or rail or track) that runs in the axle direction of the rotor. In order to be able to mount the magnets to the rotor, the slots of the rotor are slightly wider than the magnets/magnet modules. Due to this difference of the width of the magnet module and the slot, the magnet may slide from one side of the slot to the other side of the slot depending on the forces between the stator teeth and the magnet.

In some applications, the magnet module may consist of a magnet fixed to a base plate. In this case, the base plate is the part that may slide from one side to the other side of the slot or rail or track. The sliding from one side to the other side may over time have the effect that the support on the side of the slot might break and that the magnet or the magnet module may come off or do critical damage to the machine.

Conventionally, the magnet modules are held by friction forces. However, it had been observed that slight movements of the magnet modules might occur during operation resulting in the risk of damage and/or wear and resulting also in excessive noise and vibration.

In particular, a problem occurred with a permanent magnet electrical machine which comprises two, three, four or even more stator segments, wherein electrical windings of each stator segment is connected to an individual converter. If these kinds of electrical machine are run in reduced converter operation (meaning that at least one stator segment is not operational), increased risk of movement of magnet modules may result.

Thus, there may be a need for a magnet system, a rotor and a permanent magnet electrical machine, wherein movement of magnets or magnet modules in particular in a tangential or circumferential direction is reduced compared to conventionally known systems.

### Summary of the Invention

This need may be met by the subject matter according to the independent claims. Advantageous embodiments of the present invention are described by the dependent claims.

According to an embodiment of the present invention it is provided a magnet system for a rotor of a permanent magnet electrical machine, comprising: a first (e.g. magnet) module comprising a first support member; a second (e.g. magnet) module comprising a second support member; wherein the first module comprises a first permanent magnet supported by the first support member and/or the second module comprises a second permanent magnet supported by the second support member, wherein the first support member and the second support member have respective contact portions (e.g. interlocking/engaging/locking portions) which are at least partly structurally complementary to each other allowing to arrange the first module and the second module adjacent to each other in the axial direction (e.g. such that axial side edges contact each other), while the contact portions contact each other and causing traverse shift in a direction travers to the axial direction (in particular the circumferential direction), when pushed towards each other in the axial direction.

The rotor may be an outer rotor or an inner rotor. Thus, the magnets may be mounted at an inside face or an outside face of the rotor.

The first support member and/or the second support member may be configured for supporting a respective permanent magnet. The respective magnets may be mounted in a conventional manner to the respective support member. The magnet may be mounted or fixed to the support member e.g. by gluing (e.g. applying glue at a support surface of the support member and pressing the magnet onto it), dovetail lock, moulding etc. A cover surrounding the magnet may be welded to the support member to protect the magnet. The first support member as well as the second support member may have a substantially rectangular shape when the contact portions are disregarded. The contact portion however may protrude in particular in the axial direction from the substantially rectangular shaped support members or may comprise as a complementary structure a recess in the axial direction.

At least one or both of the first and second modules may comprise a respective permanent magnet. The magnet system may comprise more than two modules, such as three, four, five, six, seven or even more than seven or more than ten modules. The modules may be lined up in the axial direction adjacent to each other. The axial direction corresponds to the axial direction of the permanent magnet electrical machine comprising a rotor having at least one magnet system. Plural magnet systems may be provided spaced apart in the circumferential direction of the rotor and mounted thereto, in particular using slots or rails or tracks into which the respective magnet modules are slid along the axial direction. In particular, all the magnet modules may be slid in towards an axial stop member and may then contact each other at respective axial ends. In particular, a pressure in the axial direction may be applied at the end of the chain of magnet modules thereby resulting in that the contact portions of adjacent magnet modules contact each other and exert traverse forces onto each other in a direction traverse to the axial direction, in order to push the magnet module in particular in the tangential direction or substantially in the tangential direction to be in close contact with a wall section of a slot or a track or a rail. Thereby, tangential movement of the magnet modules may be reduced or even be avoided.

The contact portions of adjacent modules, i.e. the first module and the second module for example, may partially at least slide along each other at respective straight edges which may be tapered or slanted relative to or in comparison to the axial direction. Or, for example, the contact portion or at least contact edges may have at least partly a wedge shape. The contact portions may be configured to interlock and/or engage and/or lock with each other. Structurally complementary may mean that one of the contact portions, for example the contact portion of the first module, comprises a structure in a particular shape, wherein the second contact portion of the second module comprises a cavity or a recess of a substantially same geometrical shape. When pushing the respective contact portions of the first module and the second module against each other in the axial direction, either the entire respective module or at least the side or edge at which the respective contact portion is provided, may traversely shift or move in a direction traverse to the axial direction (in particular perpendicular to the axial direction which corresponds to the circumferential direction of the rotor). Thereby, the edge of the respective module or the entire module may be pressed onto a circumferential wall section of a rail or a track or a slot and thereby hampering or prohibiting tangential, i.e. circumferential, movement during operation.

The respective support members may be configured as base plate having substantially a rectangular shape. The support member may have a larger thickness in an area where the respective magnet is to be mounted and may have in a marginal region a lower thickness. After having assembled or mounted the respective magnet to the respective support member, also a metal cover or metal cap may be provided above the magnet for protecting the magnet. The cap or cover (in particular metal cover) may be welded at the base plate for example.

According to an embodiment of the present invention, the contact portion of each support member is arranged close to a side edge of the respective support member and/or at an axial end and/or wherein the contact portion is integrally formed with the respective support member.

When the contact portion is close to a side edge (for example running in the axial direction), the manufacturing may be simplified. The contact portion may either protrude or be recessed relative to a respective axial end of the respective support member.

When the contact portion is integrally formed with the respective support member, also manufacturing may be simplified.

According to an embodiment of the present invention, the contact portion of the first support member is arranged at an axial end of the first support member, wherein the first support member has another contact portion at another axial end, and/or wherein the contact portion of the second support member is arranged at an axial end of the second support member, wherein the second support member has another contact portion at another axial end.

When at least one or all of the support members have a contact portion at the axial end and also another contact portion at another axial end, plural magnet modules may be lined up in the axial direction and may be pushed in a direction traverse to the axial direction when pressed against each other in the axial direction. Thereby, all magnet modules in the chain of adjacent magnet modules may forcibly be pushed towards one side (wall) of a rail or track or slot which is provided for inserting the magnet modules in the axial direction. One module may interact with (contact) two other modules, one at the axial end and the other at the other axial end of the considered magnet module.

At the axial ends of the chain of magnet modules, either respective modules having only one contact portion at an axial side facing an adjacent magnet module may be provided. Alternatively, at axial ends of the chain of magnet modules, end plates, for example support members without having a magnet mounted, may be provided which may have a respective contact portion only at one axial end.

According to an embodiment of the present invention, the contact portion and/or the other contact portion of the first support member comprises a, in particular tapered, protrusion protruding in the axial direction (e.g. from the axial end or the other axial end), wherein the contact portion and/or the other contact portion of the second support member is formed by a, in particular tapered, recess recessed in the axial direction.

The recess may be complementary to the protrusion or the recess of the second support member may be complementary in shape to the protrusion of the first contact portion of the first support member. Thus, the protrusion may at least partly or completely fill a space formed by the recess when the first and the second modules are lined up in the axial direction and when they are pushed towards each other in the axial direction. By providing the protrusion and the recess, the contact portions are implemented in a simple manner. The protrusion may in particular comprise at least one slanted edge or surface allowing to slide the protrusion into the recess thereby causing a traverse force on the support member with which the protrusion is in contact.

According to an embodiment of the present invention, the protrusion partly deforms when pushed along the axial direction into the recess. When the protrusion at least partly deforms, the interlocking or engaging between the protrusion and the recess may be enforced providing additional holding forces, for example clamping forces similar to a press-fit. Thereby, the stability of the mounted modules may be improved.

According to an embodiment of the present invention, the protrusion and material limiting the recess have complementary sliding surfaces tilted relative to the axial direction (but e.g. being at a constant radial position), thereby engaging in a wedge like manner and/or wherein the protrusion and the recess are shaped such that when the protrusion is entirely inserted into the recess, (in particular straight) edges (e.g. at the axial or the other axial end) of the first support member and the second support member contact each other.

The sliding surfaces may allow to slide the contact portion of the first magnet module with respect to the contact portion of the second magnet module. The sliding surfaces may in particular be or comprise straight edges or surfaces or plane surfaces. The tilt angle relative to the axial direction may for example be between 1° and 45°. Other angles are possible. When edges of the first support member and the second support member contact each other, the magnets may be mounted very close to each other as may be desired depending on the application.

According to an embodiment of the present invention, the protrusion and/or the recess has trapezoid shape or triangular shape or tapered rectangular shape. Thereby, the manufacturing may be simplified, since simple geometrical shapes can be manufactured conventionally in a simple manner.

According to an embodiment of the present invention, the protrusion and/or the recess is over the whole thickness or over only a part of the thickness of the respective support member. When the protrusion and/or the recess is over the entire thickness of the respective support member (in particular in a region of the support member which is outside a region at which the permanent magnet is mountable), manufacturing may be simplified. However, when the protrusion and/or the recess is over only a part of the thickness of the respective support member, it may be enabled that the contact portions are also provided in a portion of the respective support member beneath or below a magnet. Thus, the area of the respective contact portions, in particular the contact area with an adjacent contact portion, may be increased thereby also possibly increasing the traverse force generated by the two contact portions contacting and pressing to each other in the axial direction. The recess may for example have a triangular shape, wherein about a half of the thickness of the support member may be removed or may be missing. The protrusion may for example then have a trapezoid shape or also a triangular shape.

According to an embodiment of the present invention, the protrusion and/or the recess has an extent in axial direction of the support member of between 0.1 and 0.2 of an axial extent of the support member and/or the first support member and/or the second support member is essentially configured as metal base plate, in particular essentially rectangular.

Depending on the application and the expected tangential forces acting on the magnet modules during operation, the axial extent and also the slanting or tilt angle relative to the axial direction may be appropriately adjusted. Furthermore, when a substantially rectangular base plate is utilized as a respective support member, conventionally available parts may be utilized in embodiments of the present invention.

According to an embodiment of the present invention, at least one of the following holds: the first support member and/or the second support have essentially the same shape; the first support member and/or the second support have the same shape and 180° rotation symmetry; the first support member and/or the second support have different shapes; the first support member and/or the second support have a mirror symmetry.

When the first and the second support members have same shape, manufacturing may be simplified. According to an embodiment of the present invention, the first support member as well as the second support member both have a recess and a protrusion at different axial ends. According to another embodiment of the present invention, the first support member has a protrusion at both axial ends and the second support member has two recesses at two axial ends. According to a still another embodiment, the first as well as the second support member have at a first axial side a protrusion and a recess and also have on a second axial side a protrusion and a recess.

According to an embodiment of the present invention, the first support member and/or the second support has a protrusion as well as a recess or the first support member and/or the second support has only at least one protrusion but no recess or wherein the first support member and/or the second support has no protrusion but only at least one recess. Thereby, different configurations or implementations of contact portions are enabled.

When for example the first support member has protrusions at both axial ends (e.g. close to a circumferential edge), a force acting in the same traverse direction may act when this support member is sandwiched between two adjacent support members each having at the contacting axial edge a respective recess. The central support member may then be pushed towards this circumferential side close to which the protrusions are provided. Thus, this configuration may result in a parallel shift or parallel force acting traverse, in particular perpendicular to the axial direction.

In contrast, when the first support member comprises at a first axial end a recess and at a second axial end a protrusion, it may be pushed at the first axial end by a traverse force acting substantially in the opposite direction than the traverse force acting at the second axial end. Thus, the respective first support member may slightly be tilted (turned) relative to the axial direction when inserted and pressed from neighbouring support members in the axial direction.

According to an embodiment of the present invention, it is provided a rotor for a permanent magnet electrical machine, comprising: a rotor yoke comprising plural axially extending rails (e.g. tracks); a magnet system according to one of the precedingly described embodiments inserted between a first rail and a second rail spaced apart in the circumferential direction in the axial direction to push against a first axial stop and clamped between the first axial stop and a second axial stop.

The rotor may be an outer rotor or an inner rotor. The rotor may for example comprise 10 to 30 magnet systems as have been described above. Each magnet system may for example comprise between 5 and 10 or 5 and 20 magnet modules which are lined up in the axial direction. The rail may for example have a T-shaped cross-section in a cross-section perpendicular to the axial direction. In particular, each rail may have a T-shape. The margin of the respective support members may be slid under the head of the "T". A respective magnet module may be slid into a track formed by two circumferentially spaced apart rails. The stem part of the "T" may form a circumferential limiting wall for the respective support member. The support member may either be pressed towards the first rail or the second rail, in particular the respective circumferential wall portion of the rail. The first axial stop and/or the second axial stop may be configured as end plates for example, having for example only on one axial side a respective contact portion similar or same as the contact portion of the respective support members.

According to an embodiment of the present invention, the magnet system is inserted into the two adjacent rails such that (a first circumferential side edge of or a portion thereof) the first support member is in contact with (e.g. pressed towards) the first rail and the second support member (or a portion thereof) is in contact with (e.g. pressed towards) the second rail. Thereby, a secure and fixed mounting of the magnet may be achieved.

According to an embodiment of the present invention it is provided a permanent magnet electrical machine, comprising: a stator; and a rotor according to the precedingly described embodiment.

The permanent magnet electrical machine may be utilized in a wind turbine according to an embodiment of the present invention. The permanent magnet electrical machine may in particular comprise a whole stator or several stator segments, for example two, three, four, five or even more stator segments. Each stator segment or the complete stator may be connected to a respective converter, in particular AD-DC-AD converter. The permanent magnet electrical machine may be configured also to be operated in partial mode, wherein not all of the stator segments are operational.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a rotor for a permanent magnet electrical machine according to an embodiment of the present invention;
Fig. 2 schematically illustrates a portion of the rotor illustrated in Fig. 1;
Fig. 3 schematically illustrates a magnet system according to an embodiment of the present invention as is for example installed in the rotor illustrated in Fig. 1;
Fig. 4 illustrates a magnet system according to an embodiment of the present invention;
Fig. 5 illustrates a magnet system according to an embodiment of the present invention;
Fig. 6 schematically illustrates a module two of which form a magnet system according to an embodiment of the present invention;
Fig. 7 schematically illustrates a magnet system according to an embodiment of the present invention;
Figs. 8 and 9 schematically illustrate a second support member of the magnet system illustrated in Fig. 7 and
Figs. 10 and 11 illustrate a first magnet module comprised in the magnet system illustrated in Fig. 7.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

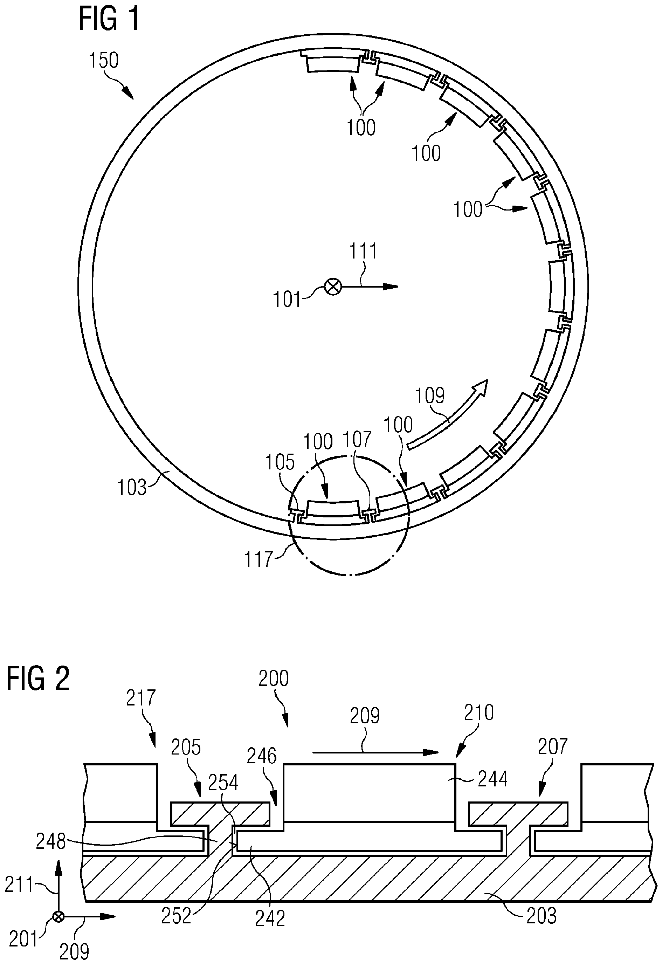

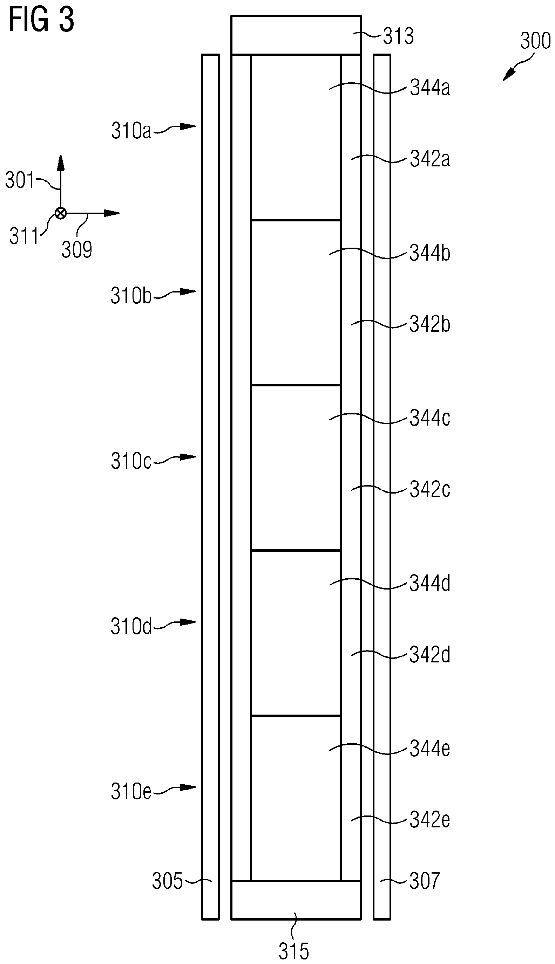

The rotor 150 schematically illustrated in Fig. 1 in a cross-sectional view sectioned perpendicular to an axial direction 101 comprises a rotor yoke 103 comprising plural axially extending rails 105, 107. The rotor 150 further comprises at least one magnet system 100 according to an embodiment of the present invention which is inserted between a first rail 105 and a second rail 107 which are spaced apart in the circumferential direction 109. The magnet system 100 is inserted in the axial direction 101 between the first rail 105 and the second rail 107. In particular, the magnet system 100 comprises plural magnet modules (for example magnet modules 310a, 310b, 310c, 310d, 310e) as is illustrated in Fig. 3 in a view along the radial direction 311 which is indicated with reference sign 111 in Fig. 1.

The rotor 150 illustrated in Fig. 1 can be utilized in a permanent magnet electrical machine which further comprises a stator inside the rotor 150.

Fig. 2 schematically illustrates a portion of the rotor 150 illustrated in Fig. 1 which portion is labelled in Fig. 1 with reference sign 117. The portion 217 illustrated in Fig. 2 is a cross-sectional illustration seen along the axial direction 201, the circumferential direction is labelled with reference sign 209. As can be appreciated from Fig. 2, the first rail 205 has a "T"-shape in the cross-sectional view which also holds for the second rail 207.

From the magnet system 200, only a single magnet module, namely the magnet module 210, i.e. a first magnet module, is visible. A second and possibly even more magnet modules is/are arranged behind the first magnet module 210. The magnet module 210 comprises a first support member 242 for supporting a first magnet 244. The first support member 242 does not have equal thickness over the entire area but comprises a region at which the first magnet 244 is mounted which has a greater thickness than in a border area 246. The magnet 244 is mounted at an area where the thickness is greater than in the border or boundary area 246.

As can be seen in Fig. 2 between the stem 248 of the "T" and the circumferential edge 252 of the first support member 242, a gap is present which is denoted by reference sign 254. The gap may have a size between 0.5 mm and 0.01 mm. The gap 254 may allow to easily slide in the magnet module 210 between the first rail 205 and the second rail 207. However, in a conventional system, during operation, the magnet module 210 may move in the tangential direction 209 which may cause problems.

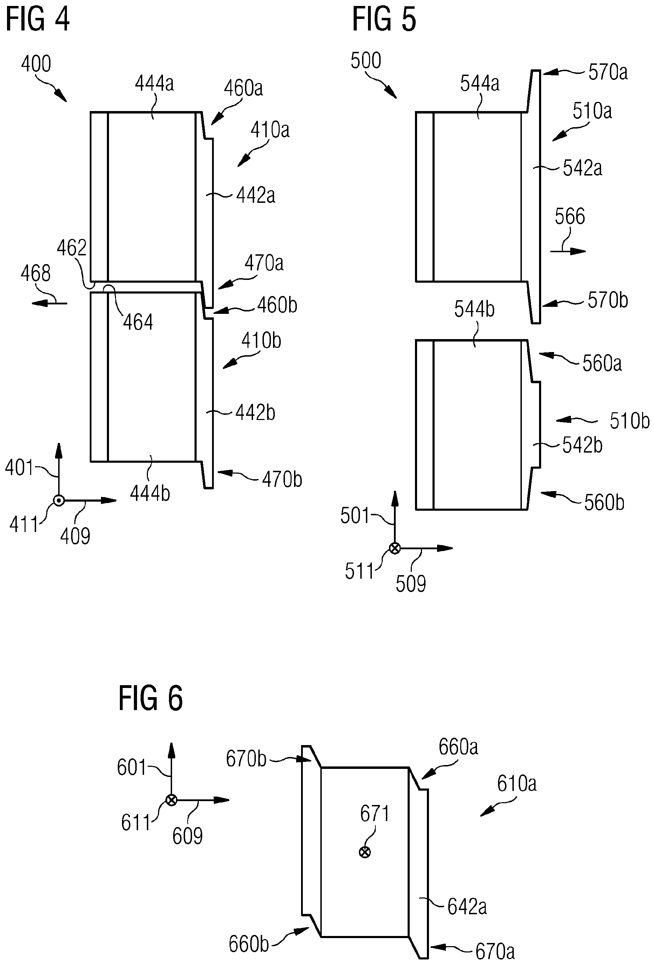

Therefore, in interface regions between adjacent magnet modules 310a, ..., 310e, (see Fig. 3) respective contact portions are provided as will be explained in more detail with reference to Figs. 4 to 11 below.

Fig. 3 schematically illustrates a magnet system 300 in a view along the radial direction 311 comprising six magnet modules 310a, 310b, 310c, 310d, 310e. The magnet modules are lined up in the axial direction 301 and are arranged between a first axial stop element 313 and a second axial stop element 315. In particular, the six magnet modules 310a, ..., 310e are clamped between the first axial stop element 313 and the second axial stop element 315. In the circumferential direction 309, the chain of magnet modules is limited or hold by the first rail 305 and the second rail 307.

Fig. 4 illustrates, along the radial direction 411, a magnet system 400 according to an embodiment of the present invention comprising a first magnet module 410a and a second magnet module 410b. Each of the magnet modules 410a, 410b comprises a respective magnet 444a, 444b mounted on a respective first support member 442a and 442b, respectively. The two magnet modules 410a, 410b have a similar construction both comprising a recess 460a and 460b at an axial side and both also comprising a protrusion 470a, 470b. The protrusion 470a, 470b is wedge-like or slanted and has a complementary structure or shape complementary to the shape of the recess 460a, 460b. When inserted between the two rails (for example illustrated in Fig. 1 or 2), the first and second magnet modules 410a, 410b will contact each other with their axial ends 462, 464 and the protrusion 470a will completely or at least partly fill the space provided by the cavity 460b. Thereupon traverse forces 466, 468 are exerted to the first magnet module 410a and to the second magnet module 410b which are opposite to each other. Thereby, the two adjacent magnet modules 410a, 410b will be pushed traverse to the axial direction 401 such as to contact circumferentially limiting rail portions of the first rail 205 and the second rail 207, respectively.

As can be seen in Fig. 4, the contact portions are configured as protrusions and recesses 470, 460 and are arranged close to a side edge (in particular circumferential side edge) of the respective magnet modules. Further, the protrusions 470a, 470b are integrally formed with the respective support members 442a, 442b. It is also visible in Fig. 4 that the respective contact portions (implemented by the recesses 460 and the protrusions 470) are provided at two axial ends of the respective support members. The protrusion 470a, 470b is tapered which also holds for the recess 460a, 460b.

Fig. 5 schematically illustrates another magnet system 500 according to an embodiment of the present invention. While the support members 442a, 442b illustrated in Fig. 4 have similar structure or at least similar contact portions, the first support member 542a comprises protrusions 570a, 570b at both axial ends. Further, the second support member 542b comprises recesses 560a and 560b at both axial ends. When pushed against each other in the axial direction 511, the first support member 442a will be pushed by the traverse force 566 (to the right in Fig. 5) while the second support member 542b will be pushed by the traverse force 568 (to the left) in Fig. 5. Thus, the support members 442a, 442b will be pushed to different rails, for example one to the first rail 205 and the other to the second rail 207 illustrated in Fig. 2. The support member 542a, 542b or in general the magnet module 510a, 510b have a mirror symmetry with respect to a mirror plane running in the plane spanned by the circumferential direction 409 and the radial direction 411.

Fig. 6 illustrates one magnet module 610a as a part of a magnet system according to an embodiment of the present invention. A magnet system may be formed by two or more of the magnet modules 610a illustrated in Fig. 6. The magnet module 610a comprises a recess 660a as well as a protrusion 670a at a first circumferential edge. Further, the magnet module 610a comprises a protrusion 670b and a recess 660b at another circumferential edge. Further, the magnet module 610a has a 180° rotation symmetry around a rotation axis 671 running along the radial direction 611.

It is noted that the protrusions and recesses illustrated in Figs. 4, 5 and 6 are provided over the whole thickness of the respective support member.

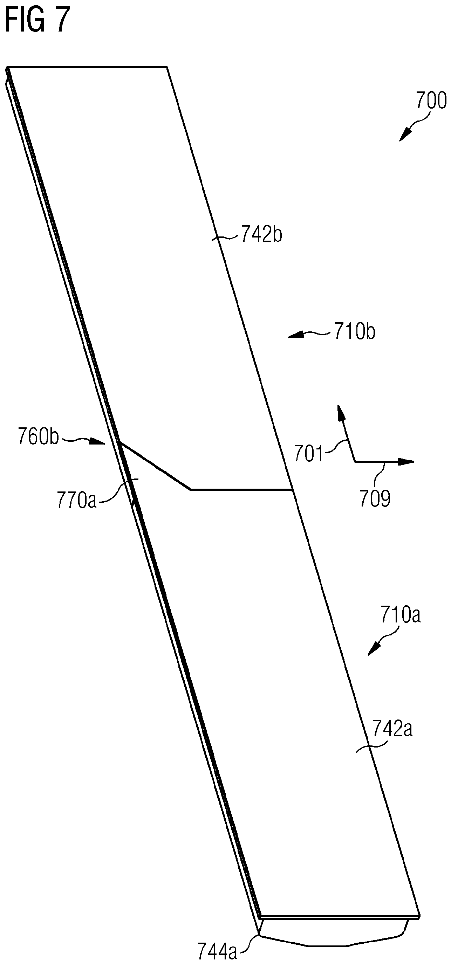

Embodiments of the present invention provide however also a magnet system, wherein contact portions of the respective magnet module are only over a part of the thickness of the respective support member. An example of a magnet system 700 is illustrated in Fig. 7 comprising a first magnet module 710a and a second magnet module 710b. The first magnet module 710a comprises a protrusion 770a and the second magnet module 710b comprises a recess 760b which is then partly filled by the protrusion 770a when the two magnet modules 710a, 710b are arranged close to each other and aligned in the axial direction 701.

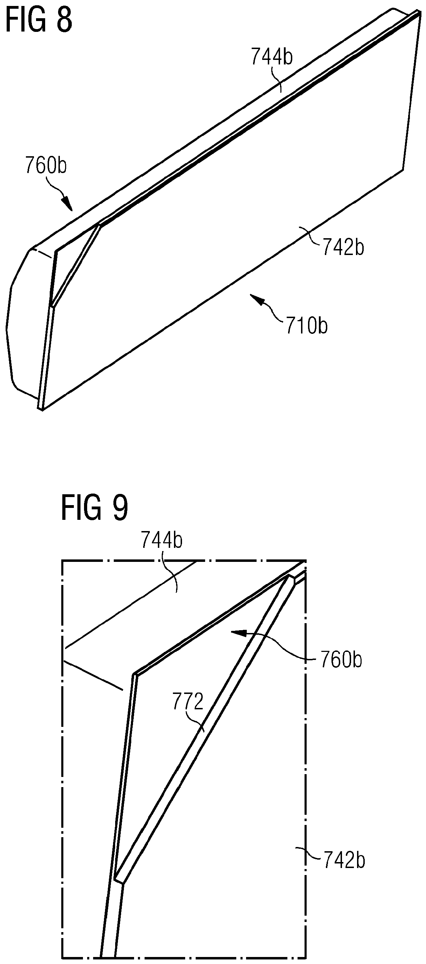

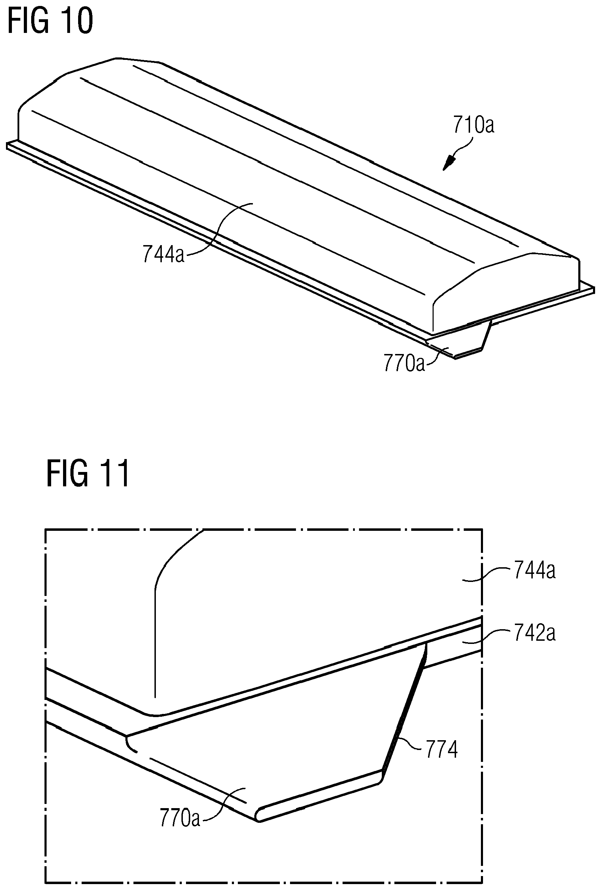

Figs. 8 and 9 illustrate in more detail the second magnet module 710b and Figs. 10 and 11 illustrate in more detail the first magnet module 710a.

The support member 742b of the second magnet module 710b has the recess 760b at a corner such that the recess is only over a portion of the thickness of the support member 742b. In particular, the recess 760b is even beneath the magnet 744b.

In contrast, the first magnet module 710a illustrated in Figs. 10 and 11 comprises a protrusion 770a only over a portion of the thickness of the first support member 742a.

As can be seen for example in Fig. 9, the material limiting the recess 760b provides a sliding surface 772, along which a sliding surface 774 of the protrusion 770a can slide thereby exerting a clamping force. Furthermore, the protrusion 770a has a trapezoid shape. The recess 760b has a triangular shape.

With reference to Figs. 4, 5 and 6, the protrusion or tip 470a, 470b, 570a, 570b may be pushed into the space of the removed part (i.e. the recess 460a, 460b, 560a, 560b of the adjacent magnet base plate of support member). The removed part of the base plate or support member may be smaller than the protrusion or top so that the tip or protrusion can fill out the removed part plus the difference between the base plate width and the slot width. By hard pressing the protrusion or the tip, the tip or protrusion can even be deformed and may also thereby act as a lock. By adjusting the dimensions of the removed part and the tip, i.e. the dimension of the recess and the protrusion, and adjusting the pressing force there will be no/very little distance between the magnet modules.

The magnet modules may be pressed against the slot walls (also referred to as rail walls), preventing movement of the magnet/magnet module in the tangential direction in all operating conditions. The magnet blocks and the magnet cover may similarly as conventionally known. The tilt of the protrusions or recesses is selected such that upon acting an axial force to the magnet modules, the modules will be pushed in a direction traverse to the axial direction, thus towards the walls or sides of the rails or the slot, for example the rails 205 and 207 illustrated in Fig. 2. Thereby, the axial force may for example be exerted on the magnet module at the NDE of the slot. The protrusion may also be described as a conical tip and the recess may be referred to as a cut-out. The conical tip and the cut-out may act like one or two wedge(s) and thereby will exert tangential forces at the respective support members for pressing them towards the rail walls, thereby eliminating the gap 254 illustrated in Fig. 2 at one side.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Magnet system (100) for a rotor of a permanent magnet electrical machine, comprising:
a first module (310a) comprising a first support member (342a) ;
a second module (310b) comprising a second support member (342b);
wherein the first module comprises a first permanent magnet (344a) supported by the first support member and/or the second module comprises a second permanent magnet (344b) supported by the second support member,
wherein the first support member (342a) and the second support member (342b) have respective contact portions (460a,460b,470a,470b) which are at least partly structurally complementary to each other allowing to arrange the first module (310a) and the second module (310b) adjacent to each other in the axial direction (301), while the contact portions (460a,460b,470a,470b) contact each other and causing traverse shift in a direction travers to the axial direction, when pushed towards each other in the axial direction (301).

2. Magnet system according to the preceding claim,
wherein the contact portion (460a,460b,470a,470b) of each support member is arranged close to a side edge of the respective support member and/or at an axial end and/or
wherein the contact portion (460a,460b,470a,470b) is integrally formed with the respective support member.

3. Magnet system according to one of the preceding claims,
wherein the contact portion (460a) of the first support member (442a) is arranged at an axial end of the first support member, wherein the first support member has another contact portion (470a) at another axial end, and/or
wherein the contact portion (460b) of the second support member (442b) is arranged at an axial end of the second support member, wherein the second support member has another contact portion (470b) at another axial end.

4. Magnet system according to one of the preceding claims,
wherein the contact portion and/or the other contact portion of the first support member (442a) comprises a, in particular tapered, protrusion (460a) protruding in the axial direction,
wherein the contact portion and/or the other contact portion of the second support member (442b) is formed by a, in particular tapered, recess (460b) recessed in the axial direction.

5. Magnet system according to the preceding claim,
wherein the protrusion (470a) partly deforms when pushed along the axial direction into the recess.

6. Magnet system according to one of the preceding claims 4 or 5,
wherein the protrusion (470a) and material limiting the recess (460a) have complementary sliding surfaces (772, 774) tilted relative to the axial direction, thereby engaging in a wedge like manner and/or
wherein the protrusion and the recess are shaped such that when the protrusion is entirely inserted into the recess, edges of the first support member (742a) and the second support member (742b) contact each other.

7. Magnet system according to one of the preceding claims 4 to 6, wherein the protrusion (470a) and/or the recess (460a) has trapezoid shape or triangular shape or tapered rectangular shape.

8. Magnet system according to one of the preceding claims 4 to 7, wherein the protrusion (470a) and/or the recess (460a) is over the whole thickness or over only a part of the thickness of the respective support member.

9. Magnet system according to one of the preceding claims 4 to 8,
wherein the protrusion and/or the recess has an extent in axial direction of the support member of between 0.1 and 0.2 of an axial extent of the support member and/or
wherein the first support member (442a) and/or the second support member (442b) is essentially configured as metal base plate, in particular essentially rectangular.

10. Magnet system according to one of the preceding claims 4 to 9, wherein at least one of the following holds:
the first support member (442a) and/or the second support (442b) have essentially the same shape;
the first support member (642a) and/or the second support have the same shape and 180° rotation symmetry;
the first support member (542a) and/or the second support (542b) have different shapes;
the first support member (542a) and/or the second support (542b) have a mirror symmetry.

11. Magnet system according to one of the preceding claims 4 to 10,
wherein the first support member (442a) and/or the second support (442b) has a protrusion as well as a recess or
wherein the first support member (542a) and/or the second support has only at least one protrusion but no recess or
wherein the first support member (542b) and/or the second support has no protrusion but only at least one recess.

12. Rotor (150) for a permanent magnet electrical machine, comprising:
a rotor yoke (103) comprising plural axially extending rails (105, 107);
a magnet system (100) according to one of the preceding claims inserted between a first rail (105) and a second rail (107) spaced apart in the circumferential direction (109) in the axial direction (101) to push against a first axial stop (313) and clamped between the first axial stop and a second axial stop (315).

13. Rotor according to the preceding claim,
wherein the magnet system (100) is inserted into the two adjacent rails such that the first support member is in contact with the first rail (105) and the second support member is in contact with the second rail (107).

14. Permanent magnet electrical machine, comprising:
a stator; and
a rotor (150) according to the preceding claim.

15. Wind turbine comprising a permanent magnet electrical machine according to the preceding claim.
